# EUROPÄISCHE PATENTSCHRIFT

(11) **EP 1 685 274 B1**
(45) Veröffentlichungstag und Bekanntmachung des Hinweises auf die Patenterteilung: **17.02.2010**
(21) Anmeldenummer: 04797752.5
(22) Anmeldetag: 10.11.2004
(51) Int. Cl.: C23C 22/86, C23C 22/73, C23G 1/36

(54) **ABWASSERREDUZIERTES PHOSPHATIERVERFAHREN DURCH AUFARBEITUNG VON ENTFETTUNGSLÖSUNG UND/ODER SPÜLWASSER**
WASTE-WATER-REDUCED PHOSPHATING METHOD BY REPROCESSING A SOLUTION FOR REMOVING FAT AND/OR RINSING WATER
PROCEDE DE PHOSPHATATION LIMITANT LA QUANTITE D'EAUX USEES, PAR TRAITEMENT DE SOLUTION DE DEGRAISSAGE ET/OU D'EAU DE LAVAGE

(30) Priorität: 21.11.2003 DE 10354563
(43) Veröffentlichungstag der Anmeldung: 02.08.2006
(73) Patentinhaber: Henkel AG & Co. KGaA, 40589 Düsseldorf (DE)
(72) Erfinder: BROUWER, Jan-Willem, 47877 Willich (DE); KUHM, Peter, 40724 Hilden (DE); KRÖMER, Jens, 40225 Düsseldorf (DE); PEIROW, Iradj, 47802 Krefeld (DE); MANDERSCHEID, Karl, 50354 Hürth-Fischenich (DE)
(86) Internationale Anmeldenummer: PCT/EP2004/012682
(87) Internationale Veröffentlichungsnummer: WO 2005/049890

(56) Entgegenhaltungen:
- WO-A-03/078684
- WO-A-2004/050949
- DE-A1- 10 043 927
- US-B1- 6 464 879
- PATENT ABSTRACTS OF JAPAN Bd. 2003, Nr. 03, 5. Mai 2003 (2003-05-05) & JP 2002 332583 A (NIPPON PAINT CO LTD; TOYOTA MOTOR CORP; NITTO DENKO CORP), 22. November 2002 (2002-11-22)

## Beschreibung

Gegenstand des erfindungsgemäßen Verfahrens ist ein Verfahren zur Aufbereitung von Reinigungslösung und/oder deren Spülwasser vor der Phosphatierung, durch die der Abwasserkreislauf so vollständig geschlossen werden kann, das das gesamte Phosphatierverfahren weitgehend oder vollständig abwasserfrei arbeitet.

Die Phosphatierung von Metallen verfolgt das Ziel, auf der Metalloberfläche festverwachsene, kristalline Metallphosphatschichten zu erzeugen, die für sich bereits die Korrosionsbeständigkeit verbessern und in Verbindung mit Lacken und anderen organischen Beschichtungen zu einer wesentlichen Erhöhung der Haftung und der Resistenz gegen Unterwanderung bei Korrosionsbeanspruchung beitragen. Solche Phosphatierverfahren sind seit langem im Stand der Technik bekannt. Für die Vorbehandlung vor der Lackierung eigenen sich insbesondere die Niedrig-Zink-Phosphatierverfahren, bei denen die Phosphatierlösungen vergleichsweise geringe Gehalte an Zinkionen von z. B. 0,5 bis 2 g/l aufweisen.

Es hat sich gezeigt, daß durch die Mitverwendung anderer mehrwertiger Kationen als Zink in den Phosphatierbädern Phosphatschichten mit deutlich verbesserten Korrosionsschutz- und Lackhaftungseigenschaften ausgebildet werden können. Beispielsweise finden Niedrig-Zink-Verfahren mit Zusatz von z. B. 0,5 bis 1,5 g/l Manganionen und z. B. 0,3 bis 2,0 g/l Nickelionen als sogenannte Trikation-Verfahren zur Vorbereitung von Metalloberflächen für die Lackierung, beispielsweise für die kathodische Elektrotauchlackierung von Autokarosserien, weite Anwendung.

Eine Phosphatierlösung enthält schichtbildende Komponenten wie z.B. Zink- und ggf. weitere zweiwertige Metallionen sowie Phosphationen. Außerdem enthält eine Phosphatierlösung nichtschichtbildende Komponenten wie insbesondere Beschleuniger und deren Abbauprodukte. Die Abbauprodukte des Beschleunigers entstehen dadurch, daß dieser mit dem durch Beizreaktion an der Metalloberfläche gebildeten Wasserstoff reagiert. Die sich mit der Zeit im Phosphatierbad anreichernden nichtschichtbildenden Komponenten wie beispielsweise Alkalimetallionen und insbesondere die Abbauprodukte des Beschleunigers können aus der Phosphatierlösung nur dadurch entfernt werden, daß man ein Teil der Phosphatierlösung austrägt und verwirft und kontinuierlich oder diskontinuierlich durch neue Phosphatierlösung ersetzt. Phosphatierlösung kann beispielsweise dadurch ausgetragen werden, daß man das Phosphatierbad mit einem Überlauf betreibt und den Überlauf verwirft. In der Regel ist ein Überlauf jedoch nicht erforderlich, da durch die phosphatierten Metallteile eine ausreichende Menge Phosphatierlösung als anhaftender Flüssigkeitsfilm ausgetragen wird.

Nach der Phosphatierung wird die an den phosphatierten Teilen wie beispielsweise Automobilkarossen anhaftende Phosphatierlösung mit Wasser abgespült. Da die Phosphatierlösung Schwermetalle und ggf. weitere Inhaltsstoffe enthält, die nicht unkontrolliert in die Umwelt abgegeben werden dürfen, muß das Spülwasser einer Wasserbehandlung unterzogen werden. Dies muß in einem getrennten Schritt vor der Einleitung in eine biologische Kläranlage erfolgen, da sonst die Funktionsfähigkeit der Kläranlage gefährdet würde.

Da sowohl die Entsorgung des Abwassers (aus Phosphatierbadüberlauf und/oder Spülwasser) als auch die Versorgung der Phosphatieranlage mit Frischwasser Kostenfaktoren sind, besteht ein Bedarf, diese Kosten zu minimieren. Die EP-A-414 301 betrifft ein abwasserfrei arbeitendes Verfahren zur Erzeugung von Phosphatüberzügen auf Metalloberflächen mittels wäßriger, Eisen(II)- und Nitrationen enthaltender Zinkphosphatlösungen. Dabei wird dem Phosphatierbad eine Spülbadkaskade aus mindestens 2 Spülbädern nachgeschaltet, salzarmes, vorzugsweise salzfreies Wasser in das letzte Spülbad gespeist, der Wasserüberlauf in das jeweils vorausgehende Spülbad bzw. das Phosphatierbad geleitet und dem Phosphatierbad mindestens so viel salzarmes bzw. salzfreies Wasser entzogen, daß es das mit Phosphat angereicherte Spülwasser aus der Kaskade aufnehmen kann. Hierbei läßt es sich jedoch nicht vermeiden, daß sich unerwünschte Inhaltsstoffe wie beispielsweise Abbauprodukte des Beschleunigers im Phosphatierbad anreichern.

WO 99/48819 beschreibt ein Verfahren zur Aufbereitung von Phosphatierbadüberlauf und/oder von Spülwasser nach der Phosphatierung, wobei die Phosphatierung mit einer sauren wäßrigen Phosphatierlösung erfolgt, die 3 bis 50 g/l Phosphationen, berechnet als PO₄³⁻, 0,2 bis 3 g/l Zinkionen, gegebenenfalls weitere Metallionen sowie Beschleuniger enthält, **dadurch gekennzeichnet, daß** der Phosphatierbadüberlauf und/oder das Spülwasser einer Nanofiltration unterworfen wird. Im Retentat der Nanofiltration reichern sich die schichtbildenden Kationen des Phosphatierprozesses an. Daher führt man das Retentat vorzugsweise direkt oder nach Anreicherung mit weiteren Wirkstoffen in die Phosphatierlösung zurück. Das Permeat der Nanofiltration kann als Spülwasser nach der Reinigung der zu phosphatierenden Teile vor der Phosphatierung eingesetzt werden. Dieses Dokument beschreibt also bereits eine weitgehende Wertstoff-Rückführung aus dem Spülwasser in die Phosphatierlösung sowie ein Verfahren zum Einsparen von Frischwasser und damit auch zur Verringerung der Abwassermenge.

DE 198 54 431 lehrt, daß das Spülwasser nach der Phosphatierung durch Umkehrosmose, lonenaustauschverfahren, Nanofiltration, Elektrodialyse und/oder Schwermetallfällung so aufgearbeitet werden kann, daß die an Metallionen abgereicherte Wasserphase als Spülwasser zum Spülen der Metalle nach der Reinigung und vor der Phosphatierung eingesetzt werden kann.

Maßnahmen zur Verlängerung der Lebensdauer von Reinigungslösungen mittels Membranprozessen sind seit langem Stand der Technik. Hierbei werden durch eine Membranfiltration Schmutzstoffe, teilweise zusammen mit Tensiden, aus der Reinigungslösung abgetrennt und Wasser sowie Buildersalze in die Reinigungslösung zurückgeführt. Derartige Verfahren sind beispielsweise in folgender Literaturstelle näher beschrieben: N. Rajagopalan, T. Lindsey und J. Sparks, "Recycling of Aqueuos Cleaning Solutions with Membrane Filtration: Issues and Practice", Met. Finish (1999), 97(3), SS. 39-40, 42-44, 46-51.

Die nicht vorveröffentlichte deutsche Patentanmeldung DE 102 36 293 stellt sich die Aufgabe, in die Reinigungslösung und/oder in das erste Spülwasser gelangte Wirkstoffe der Phosphatierung in die Phosphatierungslösung zurückzuführen. Durch geeignete Verfahrensführung soll zusätzlich vorzugsweise eine weitere Einsparung von Spülwasser ermöglicht werden, so daß das Phosphatierverfahren nahezu abwasserfrei betrieben werden kann. Dies gelingt durch ein Verfahren zur Phosphatierung von Metalloberflächen, wobei man die Metalloberflächen im Spritz- und/oder Tauchverfahren
a) mit mindestens einer Reinigungslösung reinigt,
b) mit mindestens einem ersten Spülwasser spült,
c) mit einer Phosphatierungslösung phosphatiert, die 3 bis 50 g/l Phosphationen, berechnet als PO₄³⁻, 0,2 bis 3 g/l Zinkionen, gegebenenfalls weitere Metallionen sowie gegebenenfalls Beschleuniger enthält, und
d) mit mindestens einem zweiten Spülwasser spült
   und wobei man
e) kontinuierlich oder diskontinuierlich mindestens einen Anteil des erstens Spülwassers in die Reinigungslösung überführt,
   **dadurch gekennzeichnet, dass** man weiterhin
f) kontinuierlich oder diskontinuierlich mindestens einen Teil der Reinigungslösung und/oder einen Teil des ersten Spülwassers mit einem ersten Kationenaustauscher behandelt, der selektiv ist für Zink-, Nickel- und/oder Manganionen,
g) diesen ersten Kationenaustauscher nach Beladung mit einer Säure unter Erhalt eines ersten Regenerats regeneriert und
h) mindestens einen Teil des ersten Regenerats in die Phosphatierungslösung überführt.

Dieses Dokument offenbart weiterhin, daß aus der nach dem Teilschritt f) erhaltenen Lösung reinigungswirksame Anionen wie beispielsweise Phosphationen zurückgewonnen werden können. Diese können entweder für Reinigungszwecke wiederverwendet oder in andere Produkte umgewandelt werden, beispielsweise in Düngemittel für die Landwirtschaft. Aufgrund des Kationenaustauscherschritts f) enthalten die rückgewonnenen phosphathaltigen Wertstoffe nur so geringe Anteile an Schwermetallen, daß diese die weitere Verwendung nicht stören. Dies setzt jedoch voraus, daß der Teilschritt f) gemäß vorstehend beschriebenem Verfahren durchgeführt wird. Der dort vorgesehene lonenaustauscher hat den Nachteil, daß Spuren von Tensid und/oder Öl im Zulauf zum Ionenaustauscher auf dem Austauscherharz zurückgehalten werden. Beim Regenerieren des beladenen Austauschers werden die Tenside und/oder das Öl wieder freigesetzt und gelangen so in angereicherter Form in die Regenerate. Auf diese Weise werden die Regenerate verunreinigt und können nicht mehr oder nur nach hohem Reinigungsaufwand wieder verwendet werden.

Die nicht vorveröffentlichte deutsche Patentanmeldung DE 102 56 884 stellt sich demgegenüber die Aufgabe, Reinigungs- bzw. Spüllösungen so aufzuarbeiten, daß reinigungsaktive Anionen wie beispielsweise Phosphationen auch dann zurück gewonnen werden können, wenn man auf den Kationenaustauscher-Schritt verzichtet.

Diese Aufgabe wird gelöst durch ein Verfahren zur Phosphatierung von Metalloberflächen, wobei man die Metalloberflächen im Spritz- und/oder Tauchverfahren
a) mit mindestens einer Reinigungslösung reinigt,
b) nach der Reinigung mit mindestens einem ersten Spülwasser spült,
c) mit einer Phosphatierungslösung phosphatiert, die 3 bis 50 g/l Phosphationen, berechnet als PO₄³⁻, 0,2 bis 3 g/l Zinkionen, gegebenenfalls weitere Metallionen sowie gegebenenfalls Beschleuniger enthält, und
d) nach der Phosphatierung mit mindestens einem zweiten Spülwasser spült
   und wobei man
e) kontinuierlich oder diskontinuierlich mindestens einen Anteil des zweiten Spülwassers in das erste Spülwasser oder in die Reinigungslösung überführt,
   **dadurch gekennzeichnet, dass** man weiterhin
f) kontinuierlich oder diskontinuierlich mindestens einen Teil der Reinigungslösung und/oder einen Teil des ersten Spülwassers entnimmt, mit einem Fällungsreagenz versetzt, das mit Schwermetallkationen schwer lösliche Verbindungen bildet, und danach
g) einer Membranfiltration unterzieht, wobei man ein erstes Retentat und ein erstes Permeat enthält.

Die in vorstehend zitierten Dokumenten beschriebenen Verfahrensweisen reduzieren den Abwasseranfall gegenüber zuvor bekannten Verfahren bereits deutlich. Dennoch stellt sich die Aufgabe, die Menge des im Gesamtprozess der Phosphatierung anfallenden Abwassers weiter zu verringern.

Die vorliegende Erfindung betrifft ein Verfahren zur Phosphatierung von Metalloberflächen, gemäß Anspruch 1.

Wenn dabei von "mindestens" einer Reinigungslösung oder von "mindestens" einem Spülwasser die Rede ist, so bedeutet dies, daß anstelle einer jeweils einzigen Reinigungs- oder Spülstufe mehrere hintereinander geschaltete Reinigungs- oder Spülstufen vorgesehen sein können. In der Praxis ist dies durchaus üblich. Für die vorliegende Erfindung heißt dies, daß die beschriebenen Maßnahmen jeweils an mindestens einer dieser Reinigungs- oder Spülstufen vorgenommen werden. Die Formulierung "ein Teil der Reinigungslösung" bzw. "ein Teil des ersten Spülwassers" bedeutet, daß nicht die gesamte erste Reinigungslösung bzw. das gesamte erste Spülwasser der genannten Behandlung unterzogen wird. Vielmehr entnimmt man jeweils einen Teil hiervon und führt ihn der genannten Behandlung zu: Dabei kann es sich beispielsweise um den Überlauf handeln, der aus der Reinigungslösung bzw. dem ersten Spülwasser herausgeführt wird.

Die im Teilschritt c) der erfindungsgemäßen Verfahrensfolge einsetzbare Phosphatierungslösung ist bereits in den vorstehend zitierten Dokumenten DE 102 36 293 und DE 102 56 884 näher beschrieben worden. Diese Phosphatierungslösungen sind auch im Rahmen der Verfahrensfolge gemäß der vorliegenden Erfindung einsetzbar und müssen daher nicht nochmals beschrieben werden. Vielmehr wird auf die genannten Dokumente verwiesen.

Der im Teilschritt e) genannte Zwischenbehälter ist ein Pufferbehälter, in den man einen Teil der Reinigungslösung und/oder des Spülwassers einleitet und hieraus in das Ultrafiltrationsmodul leitet. Dabei wird das Retentat der Ultrafiltration ("erstes Retentat") vorzugsweise im Kreis geführt, d. h. wieder in den Zwischenbehälter zurückgeleitet.

Im einfachsten Falle kann das erste Permeat der Ultrafiltration ("erstes Permeat") mindestens teilweise eindampfen. Hierbei entstehende Feststoffe werden konventionell entsorgt oder einer Wiederverwertung zugeführt. Für das Eindampfen steht in der Regel Prozesswärme zur Verfügung, so dass hierfür kein eigener Energieeinsatz notwendig ist. Das verdampfte Wasser kann als Wasserdampf abgelassen werden. Wirtschaftlicher ist es jedoch, den Dampf zu kondensieren und das hierbei erhaltene salzarme Wasser wieder als Prozesswasser einzusetzen.

Das erste Permeat wird mindestens teilweise einer Umkehrosmose unterzogen. Hierbei erhält man ein zweites Retentat und ein zweites Permeat. Das zweite Retentat wird zumindest teilweise in den vorstehend genannten Zwischenbehälter zurückgeführt. Hierbei erhöht sich die Konzentration an Schwermetallionen in dem Zwischenbehälter letztlich so weit, das diese als schwerlösliche Verbindungen (Hydroxide, Carbonate, Phosphate, ...) ausfallen und abgetrennt werden können. Der nicht in den Zwischenbehälter zurückgeführten Anteil des zweiten Retentats oder auch die gesamte Menge des zweiten Retentats kann zumindest teilweise, dies heißt zu einem gewissen Teil oder vollständig, eingedampft werden. Für den Energieeinsatz und die weitere Behandlung des Dampfes gelten die vorstehend gemachten Ausführungen.

Für das Eindampfen des zweiten Retentats gibt es folgende Alternativen: Zum einen kann man das zweite Retentat vollständig eindampfen. Der hierbei erhaltene Festkörper wird konventionell entsorgt oder einer Aufarbeitung zugeführt. Dieser Festkörper besteht hauptsächlich aus Alkalimetallphosphaten, -nitraten und/oder -carbonaten, die als Wirkstoffe in der Reinigungslösung eingesetzt oder die über eine Kreislaufführung von Spülwasser in diese eingetragen wurden. Das Alkalimetall ist in der Regel Natrium, kann aber auch zumindest teilweise Kalium darstellen.

In einer speziellen Ausführungsform dampft man das zweite Retentat nur so weit ein, dass die Löslichkeiten von Alkalimetallphosphat und/oder Alkalimetallcarbonat unterschritten wird (d. h. die Löslichkeitsprodukte überschritten werden), die Löslichkeitsgrenze von Alkalimetallnitrat jedoch noch nicht erreicht ist (d. h. dessen Löslichkeitsprodukt noch nicht überschritten ist). Als Alkalimetall wird in der Regel weitgehend oder vollständig Natrium vorliegen, so daß insbesondere die Löslichkeiten der entsprechenden Natriumsalze relevant sind. Beispielsweise betragen die Löslichkeiten (bei Raumtemperatur) von Trinatriumphosphat 11,1 Gew.-%, von Natriumcarbonat 17,9 Gew.-%, von Natriumnitrat hingegen 45,6 Gew.-%. Durch fraktioniertes Eindampfen lässt sich demnach festes Natriumphosphat und/oder Natriumcarbonat gewinnen, das keine wesentlichen Mengen an Natriumnitrat enthält. Der Natriumphosphat und/oder Natriumcarbonat enthaltende Festkörper kann daher von der nitrathaltigen Lösung abgetrennt und beispielsweise zum Neuansatz von Reinigungslösungen wieder verwendet werden. Die verbliebene, Natriumnitrat enthaltende Lösung kann in einer zweiten Eindampfungsstufe vollständig eingedampft oder auch als solche wieder verwendet werden. Eine Wiederverwendungsmöglichkeit der Lösung oder des durch vollständigen Eindampfens erhaltenen Feststoffs liegt beispielsweise in der Düngemittelindustrie.

Das bei der Umkehrosmose anfallende zweite Permeat wird vorzugsweise zum Ergänzen von Spülwasser und/oder von Reinigungslösung wieder verwendet.

Im Rahmen der erfindungsgemäßen Verfahrensfolge geht man vorzugsweise so vor, dass man kontinuierlich oder diskontinuierlich mindestens einen Anteil des zweiten Spülwassers in das erste Spülwasser oder in die Reinigungslösung überführt. Wie im Stand der Technik bekannt, kann dies direkt oder nach einem Aufarbeitungsschritt mit beispielsweise einer Nanofiltration erfolgen. Eine spezielle Ausführungsform dieses Verfahrensschritts besteht demnach darin, dass man den Anteil des zweiten Spülwassers einer Nanofiltration unterzieht, wobei man ein drittes Retentat und ein drittes Permeat erhält. Das dritte Permeat wird zumindest teilweise in das erste Spülwasser oder in die Reinigungslösung überführt. Das dritte Retentat führt man vorzugsweise direkt oder insbesondere nach weiterer Aufarbeitung (z.B. Ergänzung mit weiteren Wirkstoffen) in die Phosphatierungslösung zurück.

Das dritte Permeat kann unmittelbar in das erste Spülwasser oder in die Reinigungslösung überführt werden. Zum besseren Schließen von Stoffströmen ist es jedoch vorzuziehen, dass man das dritte Permeat einer Umkehrosmose unterzieht, wobei man ein viertes Retentat und ein viertes Permeat erhält. Das vierte Retentat wird zumindest teilweise in die Reinigungslösung überführt. Das vierte Permeat wird vorzugsweise entsalzt, in dem man es über einen oder mehrere Ionenaustauscher leitet, die Kationen und Anionen binden. Das hierdurch erhaltene entsalzte Wasser kann man zur Ergänzung von Spülwasser oder von im Phosphatierprozess eingesetzten Prozesslösungen wie beispielsweise Reinigungslösungen, Aktivierungslösung oder Phosphatierungslösung wieder verwenden. Bei dieser Verfahrensführung fallen lediglich Regenerate der Ionenaustauscher an, die ohne spezielle Abwasserbehandlung in die Kläranlage eingeleitet werden können.

Die erfindungsgemäße Verfahrensfolge reduziert den Chemikalienverbrauch zum einen durch Rückgewinnung von Wertstoffen und zum anderen durch einen reduzierten Aufwand für die Abwasserbehandlung. Der Energieaufwand für die Verdampfung ist gering, insbesondere wenn man zumindest weitgehend die Verfahrensalternative f2) wählt. Das zweite Retentat stellt nur noch etwa 10 % des ersten Permeats dar. Daher muss nur ein geringer Teil des gesamten Flüssigkeitsstroms eingedampft werden. Das Verfahren führt letztlich zu einer vollständigen Wiederverwendung alkalischer Abwässer.

Die Kosten für Chemikalienverbrauch, für Frischwasserzusatz und die Behandlung von Abwasser verringern sich dementsprechend.

## Patentansprüche

1. Verfahren zur Phosphatierung von Metalloberflächen, wobei man die Metalloberflächen im Spritz- und/oder Tauchverfahren
a) mit mindestens einer Reinigungslösung reinigt,
b) nach der Reinigung mit mindestens einem ersten Spülwasser spült,
c) mit einer Phosphatierungslösung phosphatiert, die 3 bis 50 g/l Phosphationen, berechnet als PO₄³⁻. 0,2 bis 3 g/l Zinkionen, gegebenenfalls weitere Metallionen sowie gegebenenfalls Beschleuniger enthält, und
d) nach der Phosphatierung mit mindestens einem zweiten Spülwasser spült,
e) kontinuierlich oder diskontinuierlich mindestens einen Teil der Reinigungslösung und/oder einen Teil des ersten Spülwassers entnimmt, in einen Zwischenbehälter überführt und hieraus einer Ultrafiltration unterzieht, wobei man ein erstes Retentat und ein erstes Permeat erhält, und man das erste Permeat einer Umkehrosmose unterzieht, wobei man ein zweites Retentat und ein zweites Permeat enthält, **dadurch gekennzeichnet, dass** man das zweite Retentat zumindest teilweise in den Zwischenbehälter zurückführt und in dem Zwischenbehälter Schwermetalle ausfällt und abtrennt.

2. Verfahren nach Anspruch 1, **dadurch gekennzeichnet, dass** man das erste Permeat der Ultrafiltration zunächst teilweise eindampft und anschließend einer Umkehrosmose unterzieht.

3. Verfahren nach Anspruch 1 oder 2, **dadurch gekennzeichnet, dass** man das zweite Retentat teilweise eindampft.

4. Verfahren nach Anspruch 3 **dadurch gekennzeichnet, dass** man das zweite Retentat nur so weit eindampft, bis die Löslichkeitsgrenze von Alkalimetallphosphat und/oder Alkalimetallcarbonat unterschritten wird und sich ein Feststoff bildet, die Löslichkeitsgrenze von Alkalimetallnitrat aber noch nicht erreicht ist, und den Alkalimetallphosphat und/oder Alkalimetallcarbonat enthaltenden Feststoff von der Alkalimetallnitrat enthaltenden Lösung abtrennt.

5. Verfahren nach einem oder mehreren der vorherigen Ansprüche, **dadurch gekennzeichnet, dass** man das zweite Permeat zum Ergänzen von Spülwasser und/oder Reinigungslösung wiederverwendet.

6. Verfahren nach einem oder mehreren der vorherigen Ansprüche, **dadurch gekennzeichnet, dass** man kontinuierlich oder diskontinuierlich mindestens einen Anteil des zweiten Spülwassers in das erste Spülwasser oder in die Reinigungslösung überführt.

7. Verfahren nach Anspruch 6, **dadurch gekennzeichnet, dass** man den Anteil des zweiten Spülwassers einer Nanofiltration unterzieht, wobei man ein drittes Retentat und ein drittes Permeat enthält, und man das dritte Permeat zumindest teilweise in das erste Spülwasser oder in die Reinigungslösung überführt.

8. Verfahren nach Anspruch 7, **dadurch gekennzeichnet, dass** man das dritte Permeat einer Umkehrosmose unterzieht, wobei man ein viertes Retentat und ein viertes Permeat erhält, und das vierte Retentat zumindest teilweise in die Reinigungslösung überführt.

9. Verfahren nach Anspruch 8, **dadurch gekennzeichnet, dass** man das vierte Permeat entsalzt, in dem man es über einen oder mehrere Ionenaustauscher leitet, und das hierdurch erhaltene entsalzte Wasser zur Ergänzung von Spülwasser oder von im Phosphatierprozess eingesetzten Prozesslösungen verwendet.

## Claims

1. A method for phosphating metal surfaces, wherein the metal surfaces, in a spray or immersion method,
a) are cleaned using at least one cleaning solution,
b) are rinsed with at least a first rinsing water after cleaning,
c) are phosphated with a phosphating solution containing 3 to 50 g/l phosphate ions, calculated as PO₄³⁻, 0.2 to 3 g/l zinc ions, optionally containing further metal ions and optionally containing accelerators, and
d) are rinsed with at least a second rinsing water after phosphatation,
e) are removed, in a continuous or discontinuous manner, at least part of the cleaning solution and/or part of the first rinsing water, transfered into an intermediate container and subjected to ultrafiltration, a first retentate and a first permeate being obtained and the first permeate being subjected to reverse osmosis, enabling a second retentate and a second permeate to be obtained, **characterized in that** at least part of the second retentate is transferred back into the intermediate container and heavy metals are precipitated and separated in the intermediate container.

2. The method according to claim 1, **characterized in that** the first permeate of the ultrafiltration is first evaporated, in part, and then subjected to reverse osmosis.

3. The method according to either claim 1 or claim 2, **characterized in that** the second retentate is evaporated in part.

4. The method according to claim 3, **characterized in that** the second retentate is only evaporated until the solubility falls below the solubility limit of alkali metal phosphate and/or alkali metal carbonate and a solid forms, but without however reaching the solubility of alkali metal nitrate, and the solid containing alkali metal phosphate and/or alkali metal carbonate is separated from the solution containing alkali metal nitrate.

5. The method according to one or more of the preceding claims, **characterized in that** the second permeate is recycled to replenish rinsing water and/or cleaning solution.

6. The method according to one or more of the preceding claims, **characterized in that** at least a portion of the second rinsing water is continuously or discontinuously transferred into the first rinsing water or into the cleaning solution.

7. The method according to claim 6, **characterized in that** the portion of the second rinsing water is subjected to nanofiltration, a third retentate and a third permeate being obtained, and the third permeate is transferred, at least in part, into the first rinsing water or into the cleaning solution.

8. The method according to claim 7, **characterized in that** the third permeate is subjected to reverse osmosis, a fourth retentate and a fourth permeate being obtained, and the fourth retentate is transferred, at least in part, into the cleaning solution.

9. The method according to claim 8, **characterized in that** the fourth permeate is demineralized by being guided over one or more ion exchangers, and the demineralized water thus obtained is used to replenish rinsing water or process solutions used in the phosphatation process.

## Revendications

1. Procédé de phosphatation de surfaces métalliques, où les surfaces métalliques, dans un procédé de pulvérisation et/ou d'immersion
a) sont nettoyées par au moins une solution de nettoyage,
b) sont rincées après le nettoyage avec au moins une première eau de rinçage,
c) sont phosphatées avec une solution de phosphatation qui contient 3 à 50 g/l d'ions phosphate, calculés en PO₄³⁻, 0,2 à 3 g/l d'ions de zinc, le cas échéant d'autres ions métalliques ainsi que le cas échéant des accélérateurs, et
d) sont rincées après la phosphatation avec au moins une deuxième eau de rinçage,
e) en prélevant en continu ou de manière discontinue au moins une partie de la solution de nettoyage et/ou une partie de la première eau de rinçage, on la transfère dans un récipient intermédiaire et on la soumet à partir de celui-ci à une ultrafiltration, avec obtention d'un premier rétentat et d'un premier perméat et on soumet le premier perméat à une osmose inverse, où on obtient un deuxième rétentat et un deuxième perméat,
**caractérisé en ce qu'**on recycle le deuxième rétentat au moins en partie dans le récipient intermédiaire et on précipite les métaux lourds dans le récipient intermédiaire et on les sépare.

2. Procédé selon la revendication 1, **caractérisé en ce qu'**on concentre d'abord par évaporation en partie le premier perméat de l'ultrafiltration, puis on le soumet à une osmose inverse.

3. Procédé selon la revendication 1 ou 2, **caractérisé en ce qu'**on concentre par évaporation en partie le deuxième rétentat.

4. Procédé selon la revendication 3, **caractérisé en ce que** le deuxième rétentat n'est concentré par évaporation que jusqu'à ce qu'on passe sous la limite de solubilité du phosphate de métal alcalin et/ou du carbonate de métal alcalin et qu'il se forme un solide, mais sans atteindre la limite de solubilité du nitrate de métal alcalin, et on sépare le solide contenant le phosphate de métal alcalin et/ou le carbonate de métal alcalin de la solution contenant le nitrate de métal alcalin.

5. Procédé selon l'une ou plusieurs des revendications précédentes, **caractérisé en ce qu'**on réutilise le deuxième perméat pour compléter l'eau de rinçage et/ou la solution de nettoyage.

6. Procédé selon l'une ou plusieurs des revendications précédentes, **caractérisé en ce qu'**on transfère en continu ou de manière discontinue au moins une partie de la deuxième eau de rinçage dans la première eau de rinçage ou dans la solution de nettoyage.

7. Procédé selon la revendication 6, **caractérisé en ce qu'**on soumet la partie de la deuxième eau de rinçage à une nanofiltration, avec obtention d'un troisième rétentat et d'un troisième perméat et on transfère le troisième perméat au moins en partie dans la première eau de rinçage ou dans la solution de nettoyage.

8. Procédé selon la revendication 7, **caractérisé en ce qu'**on soumet le troisième perméat à une osmose inverse, avec obtention d'un quatrième rétentat et d'un quatrième perméat et on transfère le quatrième rétentat au moins en partie dans la solution de nettoyage.

9. Procédé selon la revendication 8, **caractérisé en ce qu'**on déminéralise le quatrième perméat, **en ce qu'**on le fait passer sur un ou plusieurs échangeurs d'ions et on utilise l'eau déminéralisée ainsi obtenue pour compléter l'eau de rinçage ou les solutions de procédé utilisées dans le processus de phosphatation.
